Europäisches Patentamt

European Patent Office

Office européen des brevets

(11) Veröffentlichungsnummer: **0 203 388**
**A2**

(12) # EUROPÄISCHE PATENTANMELDUNG

(21) Anmeldenummer: **86105765.1**

(22) Anmeldetag: **25.04.86**

(51) Int. Cl.⁴: **G01N 21/89**

(30) Priorität: **24.05.85 DE 3518832**

(43) Veröffentlichungstag der Anmeldung:
**03.12.86 Patentblatt 86/49**

(84) Benannte Vertragsstaaten:
**BE CH DE FR GB IT LI LU NL SE**

(71) Anmelder: **Erwin Sick GmbH Optik-Elektronik**
**Sebastian-Kneipp-Strasse 1**
**D-7808 Waldkirch(DE)**

(72) Erfinder: **Dabelstein, Klaus, Dipl.-Ing.**
**Gut Schmalzhof**
**D-8134 Pöcking/Starnberg(DE)**
Erfinder: **Skrobol, Christian, Dipl.-Phys.**
**Leitenstrasse 14**
**D-8084 Inning(DE)**

(74) Vertreter: **Dipl.-Phys.Dr. Manitz Dipl.-Ing.**
**Finsterwald Dipl.-Ing. Grämkow**
**Dipl.-Chem.Dr. Heyn Dipl.-Phys.Rotermund,**
**B.Sc. Morgan Robert-Koch-Strasse 1**
**D-8000 München 22(DE)**

(54) **Oberflächenbeschaffenheitsfeststellungs-Lichtabtastvorrichtung mit einem Lichtkonzentrator.**

(57) Eine Oberflächenbeschaffenheitsfeststellungs-Lichtabtastvorrichtung weist eine Optik auf, die von einem Abtaststrich in einer bestimmten Richtung ausgehende Lichtstrahlen an einem Konzentrationsbereich (16') konzentriert. Am Orte des Konzentrationsbereiches (16') befindet sich ein Lichtkonzentrator (11) mit einer Lichteintrittsfläche (12) und einer parallel dazu angeordneten Soll-Lichtaustrittsfläche - (13). Zwischen der Lichteintrittsfläche (12) und der SollLichtaustrittsfläche (13) befinden sich konvex gekrümmte außen verspiegelte Randflächen (15), welche gewährleisten, daß neben einer Dunkelfeldblende (14) eintretendes Licht voll auf einen an die Soll-Lichtaustrittsfläche (13) anschließenden Fotomultiplier fällt.

FIG. 5

Oberflächenbeschaffenheitsfeststellungs-Lichtabtastvorrichtung mit einem Lichtkonzentrator

Die Erfindung betrifft eine Oberflächenbeschaffensheitsfeststellungs-Lichtabtastvorrichtung mit einer Optik, die alle von einem vorzugsweise durch einen periodisch bewegten Lichtfleck erzeugten Abtaststrich auf der Oberfläche eines Gegenstandes je nach Oberflächenbeschaffenheit in einer bestimmten, einer normalen Reflexion entsprechenden oder aufgrund von Oberflächenfehlern davon etwas abweichenden Richtung ausgehende, in einer parallel zum Abtaststrich verlaufenden Ebene angeordnete Lichtstrahl an einem punktartigen Konzentrationsbereich konzentriert, der sich je nachdem, ob die Lichtstrahlen die Normalrichtung haben oder davon winkelmäßig etwas abweichen, an einer Normalstelle oder relativ dazu etwas in Lichtstrichrichtung versetzt auf der Lichteintrittsfläche eines transparenten Lichtkonzentrators mit außen verspiegelten Seitenflächen befindet, der sich in der Lichtstrahlebene vom Konzentrationsbereich weg bis zu einer SollLichtaustrittsfläche verjüngt, wo ein flächiger Fotowandler, insbesondere ein Fotomultiplier angeordnet ist, wobei an der Normalstelle des Lichtkonzentrators und vorzugsweise noch in einem kleinen Winkelbereich um diese herum eine Dunkelfeldblende angeordnet ist, die lediglich oberhalb eines vorbestimmten Abweichungswinkels der von der Oberfläche ausgehenden Lichtstrahlen relativ zu der Normalrichtung das Licht in den Lichtkonzentrator eintreten läßt.

Derartige Lichtabtastvorrichtungen werden z.B. bei der Oberflächeninspektion von spiegelnd reflektierenden Materialien, wie Blechen eingesetzt. Hierbei wird mittels eines von einem Laserstrahl beaufschlagten Spiegelrades ein Fahrstrahl schräg auf die Bahn gelenkt, um auf dieser einen scharf gebündelten Abtastlichtfleck zu erzeugen. Der Abtastlichtfleck überstreicht die Bahn periodisch vorzugsweise quer zu ihrer Förderrichtung. Auf diese Weise wird die Bahn zeilenweise abgetastet. Das von der Bahn reflektierte Licht wird von einer nahe der Oberfläche angeordneten, parallel zu dem vom Abtastlichtfleck erzeugten Lichtstrich angeordneten Zylinderlinse erfaßt und zu einem sphärischen, parabolischen oder zylindrischen, insbesondere streifenförmig ausgebildeten Hohlspiegel gelenkt, der sämtliche empfangenen reflektierten Fahrstrahlen in einem einzigen punktartigen Konzentrationsbereich konzentriert. Dieser Konzentrationsbereich stellt die Abbildung der Oberfläche des Spiegelrades dar. Statt des abbildenden Hohlspiegels könnte auch eine entsprechend streifenförmig ausgebildete Linse verwendet werden.

In dem Konzentrationsbereich kann eine fotoelektrische Wandleranordnung vorgesehen werden, die meistens aus einem Fotomultiplier besteht. Problematisch hierbei ist jedoch, daß der Konzentrationsbereich beim Auftreten von Fehlern auf der Oberfläche von seiner Normalposition in Lichtstrichrichtung in der einen oder anderen Richtung auswandert und sich dabei nach Art einer Kaustik verbreitert. Diese Auslenkung des Konzentrationsbereiches beträgt vorzugsweise 5 cm oder winkelmäßig etwa 1,5°,so daß eine Fotoempfangsfläche von so großer flächenmäßiger Ausdehnung vor allen Dingen in Lichtstrichrichtung geschaffen werden müßte, wie sie von einem Fotomultiplier normalerweise nicht bereitgestellt werden kann.

Aus diesem Grunde hat man bereits zwischen den Konzentrationsbereich und die Empfangsfläche des Fotomultipliers einen transparenten Lichtkonzentrator gesetzt, welcher nach Art eines sich konisch verjüngenden Prismas mit außenverspiegelten Seitenflächen, einer relativ großen Lichteintrittsfläche und einer etwa um die Hälfte verkleinerten Lichtaustrittsfläche ausgebildet ist. Die Lichteintrittsfläche ist dabei so groß in Lichtstrichrichtung dimensioniert, daß sie alles innerhalb eines Winkels von ± 1,7° bis ± 0,6°zum Konzentrationsbereich gelangende Lichtstrahlen erfaßt und sie durch Reflexion an den Randflächen des Lichtkonzentrators möglichst vollständig zur verkleinerten Lichtaustrittsfläche gelangen läßt, wo der Fotomultiplier angeordnet ist.

Das Ziel der vorliegenden Erfindung besteht nun darin, eine Lichtabtastvorrichtung der eingangs genannten Gattung zu schaffen, bei der unter Berücksichtigung der natürlichen grundsätzlichen Grenzen die Lichtkonzentration im Lichtkonzentrator derart optimiert wird, daß der nutzbare Winkelbereich, innerhalb dessen sämtliche eintretenden Lichtstrahlen auch zur Soll-Lichtaustrittsfläche gelangen, einen absoluten Maximalwert erreicht.

Zur Lösung dieser Aufgabe sieht die Erfindung vor, daß die seitlichen Randflächen des sich verjüngenden Lichtkonzentrators in Richtung von der Lichteintrittsfläche weg derart zunehmend konvex gekrümmt sind, daß zumindest einige von in den Bereich der Dunkelfeldblende fallenden Lichtstrahlen bei weggedachter Dunkelfeldblende auf die konvex gekrümmten Randflächen unter so steilen Winkeln auftreffen würden, daß sie aus dem Lichtkonzentrator austreten würden, ohne die Soll-Lichtaustrittsfläche zu erreichen, und daß alle neben der Dunkelfeldblende in die Lichteintrittsfläche des Lichtkonzentrators eintretenden Lichtstrahlen unter so flachen Winkeln auf die Randflächen auftreffen, daß sie sämtlich zur Soll-Lichtaustrittsfläche gelangen.

Der Grundgedanke der Erfindung besteht darin, die Randflächen des Lichtkonzentrators so auszubilden, daß die in dem durch die Dunkelfläche abgedeckten Bereich einfallenden Lichtstrahlen für den Fall, daß die Dunkelfeldblende nicht vorhanden wäre, zumindest teilweise so reflektiert werden, daß sie ein zweites Mal auf die entgegengesetzte Randfläche auftreffen, und zwar so steil, daß sie dort von der Soll-Lichtaustrittsfläche weg zurückreflektieren und damit für die Nutzung am Fotomultiplier verloren sein würden.

Dies stört jedoch angesichts der tatsächlichen Anordnung der Dunkelfeldblende im mittleren Bereich der Lichteintrittsfläche nicht, denn diese Lichtstrahlen werden ohnehin durch die Dunkelfeldblende vom Fotomultiplier ferngehalten, weil nicht die normalreflektierte Strahlung sondern nur von Fehlern stammende Strahlen die Messung beeinflussen sollen. Stattdessen gelingt es jedoch unter Berücksichtigung und Einhaltung der grundsätzlichen physikalischen Grenzen den nutzbaren Winkelbereich wesentlich größer zu wählen, als dies bisher mit Lichtkonzentratoren möglich war.Deckt die Dunkelfeldblende z.B. einen Winkelbereich von etwa 1° ab, so kann zu beiden Seiten derselben noch ein nutzbarer Winkelbereich von 1° bis 1,7° vorgesehen werden, wobei sämtliche in diesem Winkelbereich in die Lichteintrittsfläche des Lichtkonzentrators eintretende Lichtstrahlen durch Reflexion an der verspiegelten Fläche zur Soll-Lichtaustrittsfläche, wo der Fotomultiplier angeordnet ist, gelangen können, ohne daß durch einen zu steilen Auftreffwinkel Licht zurücückreflektiert wird. Die physikalischen Gesetzmäßigkeiten können gleichwohl eingehalten werden, weil für die auf die Dunkelfeldblende fallenden Lichtstrahlen erfindungsgemäß Bedingungen geschaffen werden, die zur teilweisen Rückreflexion dieser Lichtstrahlen an den Randflächen führen würden, falls diese Lichtstrahlen nicht durch die Dunkelfeldblende abgedeckt werden würden.

Bevorzugt ist die Ausbildung so, daß die Lichteintrittsfläche bei in der bestimmten Richtung von der Oberfläche ausgehenden Lichtstrahlen senkrecht zum Mittelstrahl verläuft.

Weiter soll die Soll-Lichtaustrittsfläche parallel zur Lichteintrittsfläche verlaufen.

Weiter ist es zweckmäßig, wenn die Dunkelfeldblende 14 symmetrisch in der Mitte der Lichteintrittsfläche 12 des Lichtkonzentrators 11 angeordnet ist.

Um zu beiden Seiten des Mittelstrahls symmetrische Fehlererfassungswinkelbereiche zu - schaffen, sollen die gekrümmten Randflächen symmetrisch zum Mittelstrahl verlaufen.

Besonders vorteilhaft ist es, wenn die gekrümmten Randflächen parabolzylinderartig ausgebildet sind, wobei der Scheitel deutlich hinter der Soll-Lichtaustrittsflache liegt.

Aufgrund der erfindungsgemäßen Ausbildung ist es ohne weiteres zu realisieren, daß das Verhältnis von Lichteintritts-zu Soll-Lichtaustrittsfläche etwa 2:1 beträgt.

Der erfindungsgemäße Lichtkonzentrator ist also ein zylindrisches Gebilde, dessen Schnitte parallel zur Ebene der Vielzahl von Lichtstrahlen alle gleich sind. Bei den konvex gekrümmten Randflächen handelt es sich also um Zylinderoberflächen, die wesentlich einfacher herzustellen sind als sphärisch gekrümmte Flächen.

Eine optimale Erfassung großer nutzbarer Winkelbereiche wird erzielt, wenn die Randflächen der im Anspruch 9 angegebenen Funktion folgen. Dabei sollen die in der Funktion enthaltenen Konstanten a und b gemäß den Ansprüchen 10 und 11 dimensioniert sein.

Die Erfindung wird im folgenden beispielweise anhand der Zeichnung beschrieben; in dieser zeigt:

Fig. 1 eine rein schematische perspektivische Darstellung einer erfindungsgemäßen Oberflächenbeschaffenheitsfeststellungs-Lichtabtastvorrichtung,

Fig. 2 eine schematische Draufsicht des in eine einzige Ebene aufgeklappten Empfangsstrahlenganges der Lichtabtastvorrichtung nach Fig. 1

Fig. 3 eine vergrößerte Ansicht des Ausschnittes III in Fig. 2,

Fig. 4 eine Fig. 2 analoge Ansicht bei durch entsprechende Oberflächenbeschaffenheit um den extremen Winkel von 1,7° ausgelenkten reflektierten Lichtstrahlen,

Fig. 5 den Ausschnitt V in Fig. 4 in vergrößertem Maßstab,

Fig. 6 eine Ansicht analog den Fig. 3 und 5 bei demjenigen Ablenkungswinkel der Lichtstrahlen, ab dem sämtliche in den Lichtkonzentrator eintretenden Lichtstrahlen zur Soll-Lichtaustrittsfläche gelangen, wobei der Ablenkwinkel 0,6° beträgt,

Fig. 7 eine analoge Ansicht bei einem Ablenkwinkel von 0,2° und

Fig. 8 eine analoge Ansicht bei einem Ablenkwinkel von 1°.

In allen Figuren bezeichnen gleiche Bezugszahlen entsprechende Bauteile.

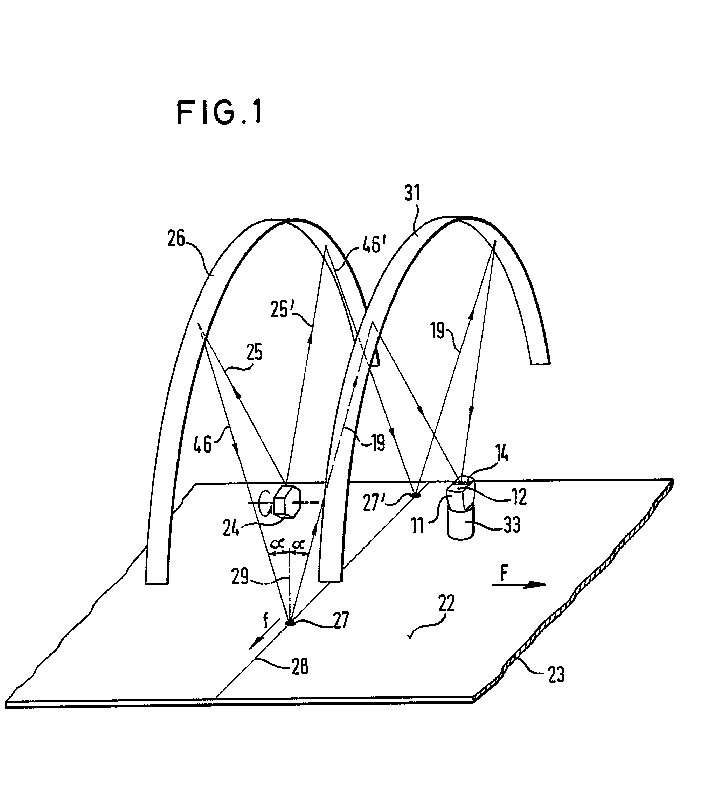

Nach Fig. 1 wird eine Blechbahn 23 in Richtung des Pfeiles F unter einer erfindungsgemäßen Lichtabtastvorrichtung kontinuierlich hindurchbewegt. Mittels eines in nicht dargestellter Weise von einem Laser beaufschlagten Spiegelrades 24 wird ein Laserlichtstrahl 25 auf einen die Bahn 23 quer zu ihrer Bewegungsrichtung F bogenförmig überspannenden streifenförmigen Hohlspiegel 26 gelenkt. Beim Drehen des Spielgelrades bewegt sich der Laserstrahl 25 sektorförmig über den streifenförmigen Hohlspiegel und gelangt dabei beispielsweise auch in die bei 25' angedeutete Position. Vom Hohlspiegel 26 werden beim Drehen des Spiegelrades 24 parallel zu sich selbst verschobene Fahrstrahlen 46, 46' erzeugt, die auf der Oberfläche 22 der Bahn 23 einen Abtastlichtfleck 27 bzw. 27' erzeugen, der die Bahn in Richtung des Pfeiles f periodisch übersteicht bzw. abtastet, so daß insgesamt ein Lichtstrich 28 entsteht. Aufgrund der kontinuierlichen Bewegung der Bahn in Richtung des Pfeiles F wird so eine zeilenmäßige Abtastung der Oberfläche 22 mittels des Lichtfleckes 27 gewährleistet.

Die das Spiegelrad 24 und den Hohlspiegel 26 umfassende Lichtsendeanordnung ist derart schräg zur Oberfläche 22 der Bahn 23 angeordnet, daß die Fahrstrahlen 46, 46' unter einem Winkel $\alpha$ relativ zur Senkrechten 29 auf der Oberfläche 22 auf die Bahn auftreffen.

Vorzugsweise ist nahe der Oberfläche 22 im Wege der Fahrstrahlen 46, 46' noch eine nicht dargestellte Zylinderlinse angeordnet.

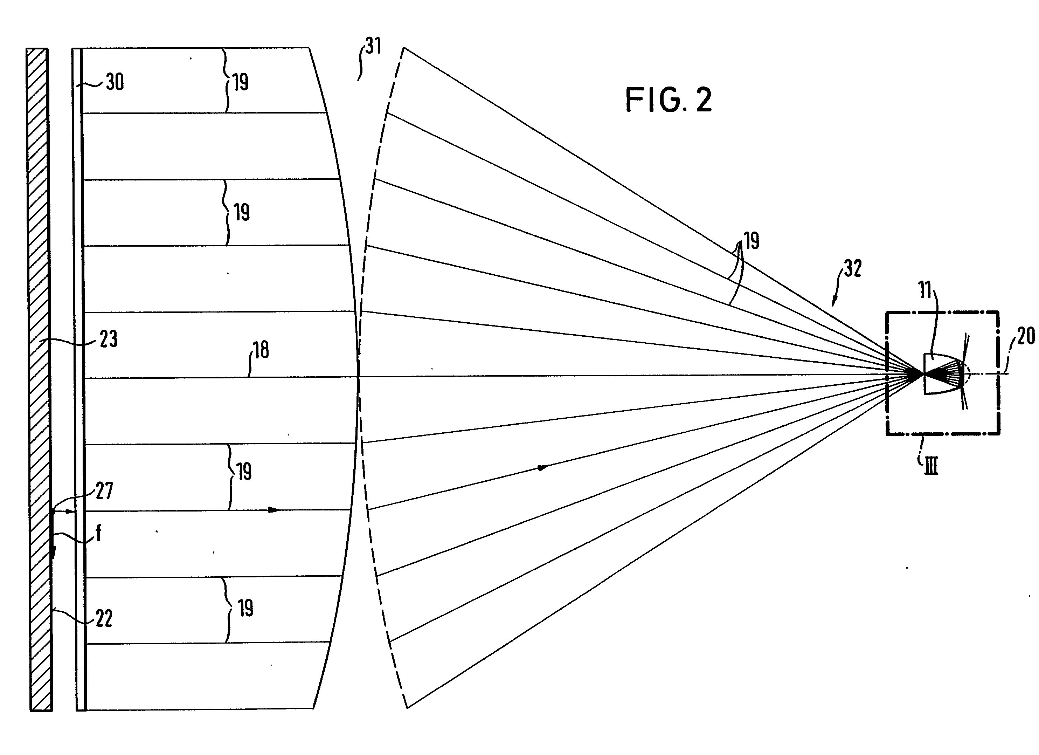

Die von der Oberfläche 22 unter dem Reflexionswinkel $\alpha$ reflektierten Lichtstrahlen 19 gelangen nach den Fig. 1 und 2 vorzugsweise nach Durchgang durch eine in Fig. 2 angedeutete Zylinderlinse 30 zu einem weiteren streifenförmigen Hohlspiegel 31, welcher die parallel zu sich selbst verschobenen reflektierten Strahlen 19 auf der Lichteintrittsfläche 12 eines erfindungsgemäßen Lichtkonzentrators 11 sammelt. Der Lichtkonzentrator 11 ist ein transparenter Block, dessen ebene Lichteintrittsfläche 12 senkrecht zum Mittelstrahl 18 des durch die Gesamtheit der reflektierten Lichtstrahlen 19 gebildeten Lichtfächers 32 steht. An seinem unteren bzw. hinteren Ende weist der Lichtkonzentrator 11 eine parallel zur Lichteintrittsfläche 12 verlaufende Soll-Lichtaustrittsfläche 13 auf, an die ein Fotomultiplier 33 angeklebt oder aufgeschwemmt ist, der das gesamte auf die Soll-Lichtaustrittsfläche 13 auftreffende Licht empfängt und in nicht dargestellter Weise ein der auftreffenden Lichtmenge proportionales elektrisches Signal an eine elektronische Auswerteschaltung abgibt. Es ist also wichtig, daß der Fotomultiplier 33 optisch einwandfrei ohne eine oder mehrere Luftgrenzflächen an den Lichtkonzentrator 11 angekoppelt wird, was mittels Klebstoff oder durch ein Öl geschehen kann.

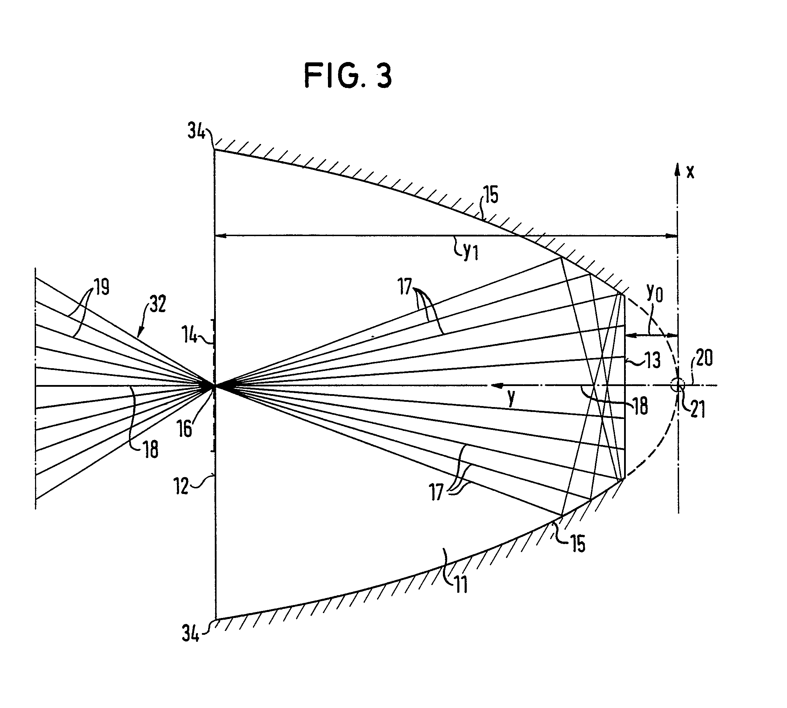

Nach Fig. 1 und 3 ist die Lichteintrittsfläche 12 im mittleren Bereich durch eine in Fig. 3 nur gestrichelt angedeutete Dunkelfeldblende 14 abgedeckt, so daß die bei normal reflektierender Oberfläche 22 reflektierten Lichtstrahlen 19 auf die Dunkelfeldblende 14 auftreffen und von dieser am Eintreten in den Lichtkonzentrator 11 gehindert werde. Die Lichtstrahlen 19 werden gemäß Fig. 3 an einem punktartigen Konzentrationsbereich 16 in der Mitte der Dunkelfeldblende 14 konzentriert.

Der erfindungsgemäße Lichtkonzentrator 11 besitzt in der Seitenansicht der Fig. 3 im wesentlichen die Form einer Parabel, die an beiden Enden senkrecht zu ihrer Mittelachse 20 abgeschnitten ist, wodurch die Lichteintrittsfläche 12 und die Soll-Lichtaustrittsfläche 13 gebildet sind. Von den beiden Enden 34 der Lichteintrittsfläche 12 erstrecken sich unter einem Winkel von etwas weniger als 90° zunehmend konvex gekrümmte Randflächen 15, die außen verspiegelt sind,

die in einem Abstand $y_0$ vom Scheitel 21 entfernt enden und dort in die Soll-Lichtaustrittsfläche 13 übergehen, die parallel zur Lichteintrittsfläche 12 verläuft. An die Soll-Lichtaustrittsfläche 13 grenzt der in Fig. 3 nicht dargestellte Fotomultiplier 33 an. Der Abstand der Lichteintrittsfläche 12 vom Scheitel 21 der konvex gekrümmten Randflächen 25 ist in Fig. 3 mit $y_i$ bezeichnet.

In strichpunktierten Linien ist in Fig. 3 auch ein kartesisches x-y-Koordinatensystem eingetragen, dessen Ursprung 0 am Ort des Scheitels 21 liegt.

Erfindungsgemäß sind die Randflächen 15 in diesem Koordinatensystem gemäß der folgenden Funktion geformt:

$$y = \frac{a \cdot x^2}{1+\sqrt{1-(b+1) \cdot a^2 \cdot x^2}}$$

Der Parameter a beträgt dabei etwa ± 0,05 der Parameter b etwa -0,9. Es handelt sich also um eine Ellipsenfunktion. Die Werte $y_0$ und $y_1$ betragen bei dem dargestellten Ausführungsbeispiel etwa 1,2 bzw. 11,2. Das Verhältnis von $y_0$ und $y_1$ liegt erfindungsgemäß zweckmäßigerweise bei etwa 1:10. Die Soll-Lichtaustrittsfläche 13 ist an die wirksame Lichtaufnahmefläche eines üblichen Fotomultipliers 33 angepaßt. Die Erstreckung der Soll-Lichtaustrittsfläche 13 in x-Richtung liegt demnach bei etwa 4,5 cm, senkrecht dazu bei etwa 4,5 cm.

Es sei nun angenommen, daß die in Fig. 3 gestrichelt angedeutete Dunkelfeldblende 14 weggelassen sei, so daß die am Konzentrationsbereich 16 zusammenlaufenden Lichtstrahlen 18, 19 in der dargestellten Weise in den Lichtkonzentrator 11 eintreten können. Aufgrund der erfindungsgemäßen Ausbildung der konvex gekrümmten verspiegelten Randflächen 15 fallen die Lichtstrahlen 17 so steil auf die verspiegelten Randflächen 15, daß keiner dieser Lichtstrahlen 17 die Soll-Lichtaustrittsfläche 13 erreicht. Vielmehr werden diese Lichtstrahlen 17 so reflektiert, daß sie ein zweites Mal auf die entgegengesetzte Randfläche 15 auftreffen, und zwar unter einem solchen Winkel, daß sie dort von der Soll-Lichtaustrittsfläche 13 weg in Richtung der Lichteintrittsfläche 12 zurück reflektiert werden. Das entsprechende Licht wäre also für eine Erfassung durch den hinter der Soll-Lichtaustrittsfläche 13 lichtdicht angekoppelten Fotomultiplier 33 verloren. Nachdem jedoch tatsächlich die Dunkelfeldblende 14 vorgesehen ist, werden die diesbezüglichen Lichtstrahlen ohnehin nicht für die Messung ausgewertet, so daß die vorstehend beschriebene Eigenschaft des erfindungsgemäßen Lichtkonzentrators keinerlei nachteilige Auswirkungen hat, es aber ermöglicht, weiter außen auftreffende Lichtstrahlen verlustfrei zur Soll-Lichtaustrittsfläche 13 zu leiten.

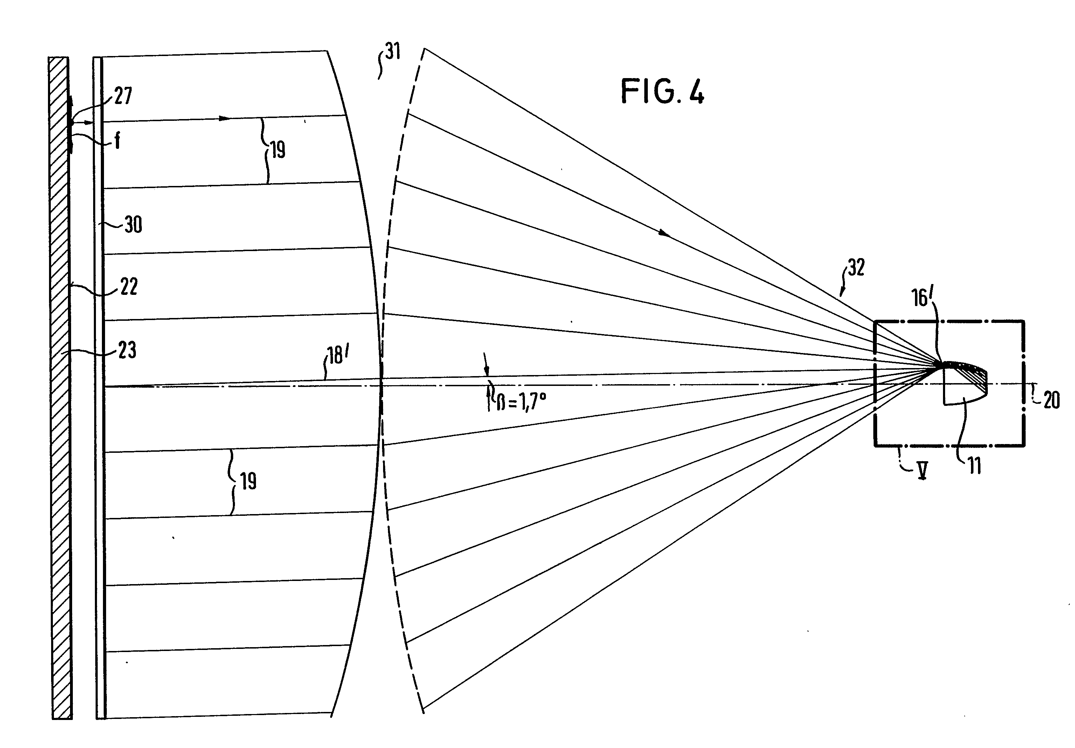

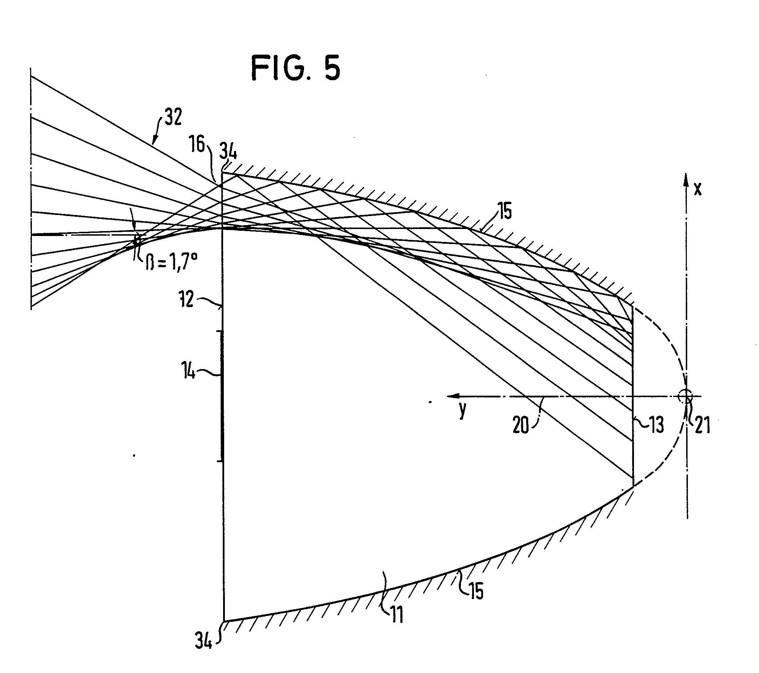

Bei der Darstellung der Fig. 4 und 5 ist angenommen, daß die von der Oberfläche 22 der Bahn 23 reflektierten Lichtstrahlen 19 aufgrund eines Oberflächenfehlers oder einer Kippung der Bahn in Richtung des Lichtstriches 28 (Fig. 1) um einen Winkel $\beta$ extrem abgelenkt sind, der in Fig. 4 lediglich für den Mittelstrahl 18' eingezeichnet ist und im Ausführungsbeispiel 1,7° beträgt. Aufgrund dieses Umstandes ist insbesondere nach Fig. 5 der Konzentrationsbereich 16' bis an den oberen äußersten Rand der Lichteintrittsfläche 12 versetzt, wodurch das gesamte Licht des Lichtfächers 32 in das Innere des Lichtkonzentrators 11 eintreten kann. Soweit das eintretende Licht nicht direkt auf die Soll-Lichtaustrittsfläche 13 gelangt, wird es an der oberen erfindungsgemäß ausgebildeten verspiegelten Randfläche 15 vollständig so flach reflektiert, daß es nach der Reflexion zur Soll-Lichtaustrittsfläche 13 gelangt, und somit voll vom Fotomultiplier 33 (Fig. 1) erfaßt wird. Die Erfassung eines derart großen Ablenkwinkels von 1,7° ist nur aufgrund der erfindungsgemäßen Ausbildung der Randflächen 15 möglich, durch welche für die von der Dunkelfeldblende 14 abgefangenen Lichtstrahlen die Bedingungen für deren Auftreffen auf die Soll-Lichtaustrittsfläche 13 bewußt nicht erfüllt werden.

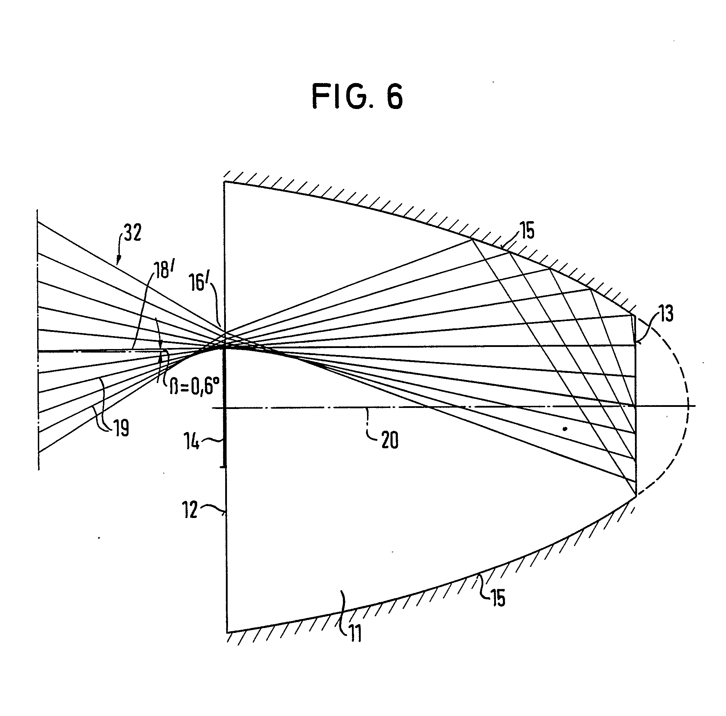

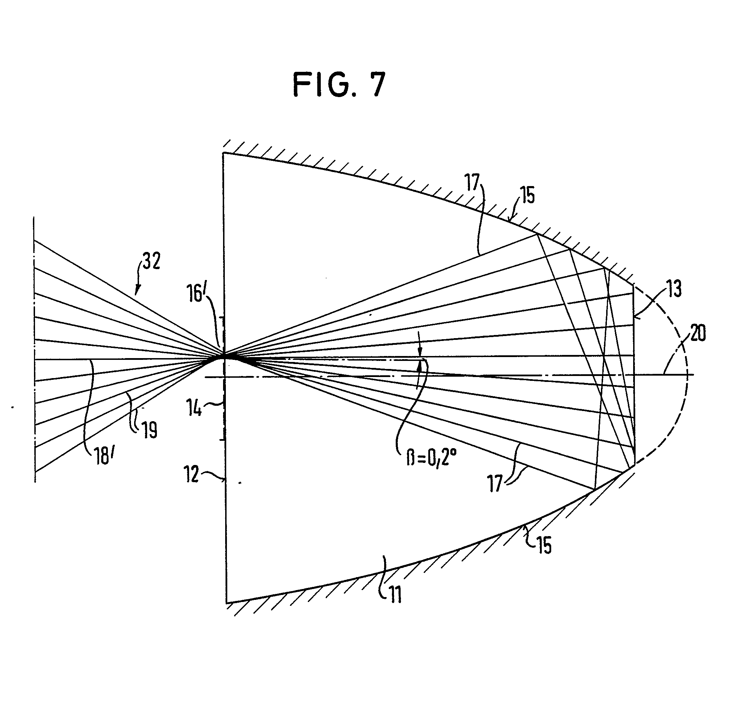

Fig. 6 zeigt die Verhältnisse für einen Ablenkwinkel $\beta$ sämtlicher austretender Lichtstrahlen 19 von 0,6°. Bei diesem Winkel gelangt der Konzentrationsbereich 16' gerade knapp neben die Dunkelfeldblende 14, wobei gerade alles Licht zur Soll-Lichtaustrittsfläche gelangt. Zum Vergleich ist in Fig. 7 der Fall dargestellt, daß der Ablenkwinkel $\beta$ 0,2° beträgt, der Konzentrationsbereich 16' sich also innerhalb der hier wieder nur gestrichelt angedeuteten Dunkelfeldblende 14 befindet. Man erkennt, daß auch in diesem Fall wieder einige bei der Weglassung der Dunkelfeldblende 14 in den Lichtkonzentrator 11 eintretende Lichtstrahlen 17 nicht zur Soll-Lichtaustrittsfläche 13 gelangen, sondern zuvor an einer der Randflächen 15 in Richtung von der Soll-Lichtaustrittsfläche 13 weg zurückreflektieren. Erst oberhalb des in Fig. 6 veranschaulichten Ablenkungswinkel $\beta$ von etwa 0,6 °, genau 0,57 °, wird die Bedingung erfüllt, daß alle in den Lichtkonzentrator 11 eintretenden Lichtstrahlen zur Soll-Lichtaustrittsfläche 13 gelangen.

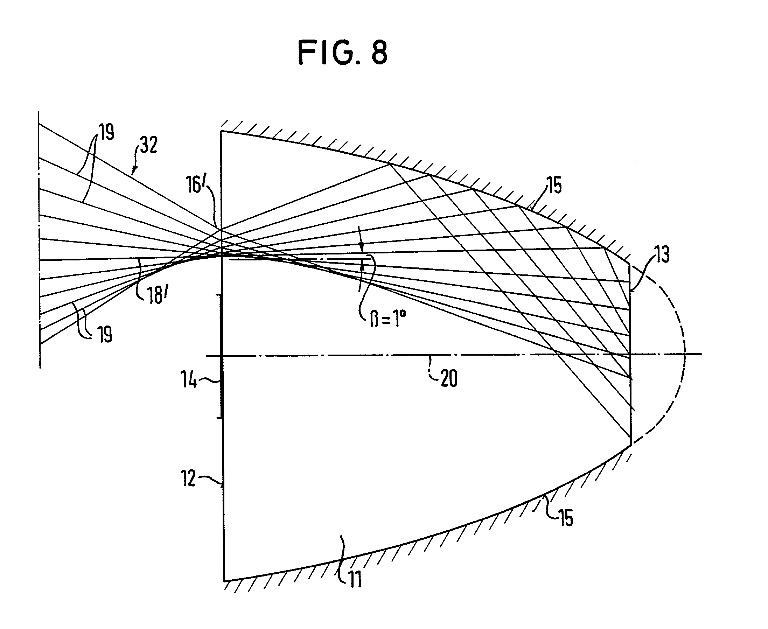

Fig. 8 veranschaulicht schließlich noch einen Zwischenablenkungswinkel $\beta$ von 1°, um darzutun, daß auch in diesem Fall sämtliche vom Konzentrationsbereich 16' in den Lichtkonzentrator 11 eintretenden Lichtstrahlen zur Soll-Lichtaustrittsfläche 13 gelangen.

Es wird somit ein nutzbarer Winkelbereich $\Delta\beta$ von 0,6° bis 1,7° auf beiden Seiten der Dunkelfeldblende 14 geschaffen, welche selbst einen Winkelbereich von etwa 1,2° einnimmt. Faßt man die beiden nutzbaren Winkelbereiche auf beiden Seiten der Dunkelfeldblende 14 zusammen, so ergibt sich ein Gesamtnutzwinkelbereich von etwa 2,2°, der jedoch wegen Ausblendung und Nichtberücksichtigung des Mittelteils im Bereich der Dunkelfeldblende effektiv von -1,7° bis +1,7° reicht, d.h. daß also Lichtstrahlen in den Außenteilen eines Gesamtwinkelbereiches von 3,4° voll zur verengten Soll-Lichtaustrittsfläche 13 geleitet werden.

**Ansprüche**

1. Oberflächenbeschaffenheitsfeststellungs-Lichtabtastvorrichtung mit einer Optik, die alle von einem vorzugsweise durch einen periodisch bewegten Lichtfleck erzeugten Abtaststrich auf der Oberfläche eines Gegenstandes je nach Oberflächenbeschaffenheit in einer bestimmten, einer normalen Reflexion entsprechenden oder aufgrund von Oberflächenfehlern davon etwas abweichenden Richtung ausgehende, in einer parallel zum Abtaststrich verlaufenden Ebene angeordnete Lichtstrahlen an einem punktartigen Konzentrationsbereich konzentriert, der sich je nachdem, ob die Lichtstrahlen die Normalrichtung haben oder davon winkelmäßig etwas abweichen, an einer Normalstelle oder relativ dazu etwas in Lichtstrichrichtung versetzt auf der Lichteintrittsfläche eines transparenten Lichtkonzentrators mit außen verspiegelten Seitenflächen befindet, der sich in der Lichtstrahlebene vom Konzentrationsbereich weg bis zu einer Soll-Lichtaustrittsfläche verjüngt, wo ein flächiger Fotowandler, insbesondere ein Fotomultiplier angeordnet ist, wobei an der Normalstelle des Lichtkonzentrators und vorzugsweise noch in einem kleinen Winkelbereich um diese herum eine Dunkelfeldblende angeordnet ist, die lediglich oberhalb eines vorbestimmten Abweichungswinkels der von der Oberfläche ausgehenden Lichtstrahlen relativ zu der Normalrichtung das Licht in den Lichtkonzentrator eintreten läßt, dadurch **gekennzeichnet**, daß die außen verspiegelten seitlichen Randflächen (15) des sich verjüngenden Lichtkonzentrators (11) in Richtung von der Lichteintrittsfläche (12) weg derart zunehmend konvex gekrümmt sind, daß zumindest einige (17) von in den Bereich der Dunkelfeldblende (14) fallenden Lichtstrahlen bei weggedachter Dunkelfeldblende (14) auf die konvex gekrümmten Randflächen (15) unter so steilen Winkeln auftreffen würden, daß sie in den Lichtkonzentrator (11) zurückreflektiert würden, ohne die Soll-Lichtaustrittsfläche (13) zu erreichen, und daß alle neben der Dunkelfeldblende (14) in die Lichteintrittsfläche (12) des Lichtkonzentrators (11) eintretenden Lichtstrahlen unter so flachen Winkeln auf die verspiegelten Randflächen (15) auftreffen, daß sie sämtlich zur Soll-Lichtaustrittsfläche (13) gelangen.

2. Lichtabtastvorrichtung nach Anspruch 1, dadurch **gekennzeichnet**, daß die Lichteintrittsfläche (12) bei in der bestimmten Richtung von der Oberfläche ausgehenden Lichtstrahlen (19) senkrecht zum Mittelstrahl (18) verläuft.

3. Lichtabtastvorrichtung nach Anspruch 1 oder 2, dadurch **gekennzeichnet**, daß die Soll-Lichtaustrittsfläche (13) parallel zur Lichteintrittsfläche - (12) verläuft.

4. Lichtabtastvorrichtung nach einem der vorhergehenden Ansprüche, dadurch **gekennzeichnet**, daß die Dunkelfeldblende (14) symmetrisch in der Mitte der Lichteintrittsfläche (12) des Lichtkonzentrators - (11) angeordnet ist.

5. Lichtabtastvorrichtung nach einem der vorhergehenden Ansprüche, dadurch **gekennzeichnet**, daß die gekrümmten Randflächen (15) symmetrisch zum Mittelstrahl (18) verlaufen.

6. Lichtabtastvorrichtung nach einem der vorhergehenden Ansprüche, dadurch **gekennzeichnet**, daß die gekrümmten Randflächen (15) parabolzylinderartig ausgebildet sind, wobei der Scheitel (21) deutlich hinter der Soll-Lichtaustrittsfläche (13) liegt.

7. Lichtabtastvorrichtung nach einem der vorhergehenden Ansprüche, dadurch **gekennzeichnet**, daß das Verhältnis von Lichteintritts-(12) zu Soll-Lichtaustrittsfläche (13) etwa 2:1 beträgt.

8. Lichtabtastvorrichtung nach einem der vorhergehenden Ansprüche, dadurch **gekennzeichnet**, daß der Lichtkonzentrator (11) ein zylindrisches Gebilde ist, dessen Schnitte parallel zur Ebene der Vielzahl von Lichtstrahlen alle gleich sind.

9. Lichtabtastvorrichtung nach einem der vorhergehenden Ansprüche, dadurch **gekennzeichnet**, daß die Randflächen (15) der Funktion

$$y = \frac{a \cdot x^2}{1+\sqrt{1-(b+1) \cdot a^2 \cdot x^2}}$$

folgen, wobei a und b Konstanten sind, wobei zweckmäßig a zwischen ± 0,012 und ± 0,14, insbesondere bei etwa ± 0,05 und/oder vorzugsweise b zwischen -0,3 und -1,0 und insbesondere bei etwa -0,9 liegt.

10. Lichtabtastvorrichtung nach einem der vorhergehenden Ansprüche, dadurch **gekennzeichnet,** daß die Dunkelfeldblende (14) einen Winkelbereich der von der Oberfläche (22) ausgehenden Lichtstrahlen (18, 19) von 1° abdeckt und/oder daß der nutzbare Winkelbereich außerhalb der Dunkelfeldblende (14) auf jeder Seite zwischen 1° bis 1,7° relativ zur Normalrichtung liegt.

# FIG.1

FIG. 2

# FIG. 3

FIG. 4

# FIG. 5

# FIG. 6

# FIG. 7

# FIG. 8